# EUROPÄISCHE PATENTSCHRIFT

(11) **EP 2 608 979 B1**
(45) Veröffentlichungstag und Bekanntmachung des Hinweises auf die Patenterteilung: **01.04.2015**
(21) Anmeldenummer: 11714759.5
(22) Anmeldetag: 14.04.2011
(51) Int. Cl.: B60L 9/30, B60L 11/18

(54) **ANTRIEBSSYSTEM FÜR EIN SCHIENENFAHRZEUG**
DRIVE SYSTEM FOR A RAIL VEHICLE
SYSTÈME DE PROPULSION POUR VÉHICULE FERROVIAIRE

(30) Priorität: 24.08.2010 DE 102010039699
(43) Veröffentlichungstag der Anmeldung: 03.07.2013
(73) Patentinhaber: Siemens Aktiengesellschaft, 80333 München (DE)
(72) Erfinder: WEIGEL, Jan, 91077 Großenbuch (DE)
(86) Internationale Anmeldenummer: PCT/EP2011/055886
(87) Internationale Veröffentlichungsnummer: WO 2012/025255

(56) Entgegenhaltungen:
- EP-A2- 0 820 893
- EP-A2- 1 226 994
- B. ENGEL, M. VICTOR, G. BACHMANN, A. FALK: "15kV/16.7Hz Energy Supply System with Medium Frequency Transformer and 6.5kV IGBTs in Resonant Operation", KONFERENZBAND DER EPE, 2003, XP009153304, in der Anmeldung erwähnt
- NICOLAS HUGO ET AL: "Power electronics traction transformer", 2007 EUROPEAN CONFERENCE ON POWER ELECTRONICS AND APPLICATIONS, 1. Januar 2007 (2007-01-01), Seiten 1-10, XP55008025, DOI: 10.1109/EPE.2007.4417649 in der Anmeldung erwähnt
- CARPITA M ET AL: "Medium frequency transformer for traction applications making use of multilevel converter: small scale prototype test results", POWER ELECTRONICS, ELECTRICAL DRIVES, AUTOMATION AND MOTION, 2006. SPE EDAM 2006. INTERNATIONAL SYMPOSIUM ON TAORMINA, ITALY MAY, 23RD - 26TH, 2006, PISCATAWAY, NJ, USA,IEEE, 1. Mai 2006 (2006-05-01), Seiten 1095-1100, XP010924651, DOI: 10.1109/SPEEDAM.2006.1649931 ISBN: 978-1-4244-0193-2

## Beschreibung

Die Erfindung bezieht sich auf ein Antriebssystem für ein Schienenfahrzeug.

Aus der Veröffentlichung mit dem Titel "15kV/16.7Hz Energy Supply System with Medium Frequency Transformer and 6.5kV IGBTs in Resonant Operation" von B. Engel, M. Victor, G. Bachmann, A. Falk, veröffentlicht im Konferenzband der EPE 2003 in Toulouse, ist ein Antriebssystem für ein Schienenfahrzeug bekannt, das netzseitig eine kaskadierte Stromrichtereinheit, einen Mittelfrequenz-Transformator und einen Ausgangsstromrichter aufweist, der gleichspannungsseitig mit Anschlüssen eines lastseitigen selbstgeführten Stromrichters verknüpft ist, an dessen wechselspannungsseitigen Anschlüssen ein Drehstrommotor angeschlossen ist. Diese kaskadierte Stromrichtereinheit weist eine Vielzahl von Kaskadenmodulen auf, die wechselspannungsseitig zwischen einem Fahrdraht/ Stromabnehmer-System und einem Rad/Schiene-System elektrisch in Reihe geschaltet sind. Jedes Kaskadenmodul weist netzseitig einen Vierquadrantensteller auf. Mittels dieser kaskadierten Stromrichtereinheiten wird via einer Netzdrossel eine relativ hohe Wechselspannung zwischen Fahdraht/Stromabnehmer-System und Rad/Schiene-System entsprechend der Anzahl der Kaskadenmodule aufgeteilt, so dass jeder Vierquadrantensteller eines Kaskadenmoduls mit handelsüblichen abschaltbaren Leistungshalbleitern, insbesondere **I**nsulated-**G**ate-**B**ipolar**T**ransistoren (IGBT), bestückt werden kann. Transformatörseitig weist jedes Kaskadenmodul eine Halbbrücke, eine Reihenschaltung zweier Kondensatoren und einen Serienkondensator auf. Diese Reihenschaltung ist elektrisch parallel zur Halbbrücke geschaltet, wobei der Serienkondensator mit einem Verbindungspunkt der beiden Kondensatoren verknüpft ist. Die beiden Ausgangsanschlüsse eines jeden Kaskadenmoduls werden einerseits vom freien Ende des Serienkondensators und andererseits vom wechselspannungsseitigen Ausgangsanschluss, auch als Lastanschluss bezeichnet, der Halbbrücke gebildet. An diesen Ausgangsanschlüssen eines jeden Kaskadenmoduls ist eine Primärwicklung des Mittelfrequenz-Transformators geschaltet, der nur eine Sekundärwicklung aufweist. An den Anschlüssen dieser Sekundärwicklung ist der Ausgangsstromrichter angeschlossen. Als Ausgangsstromrichter ist ein Vierquadrantensteller vorgesehen, deren gleichspannungsseitige Anschlüsse ein Zwischenkreis-Kondensator elektrisch parallel geschaltet ist. Diese gleichspannungsseitigen Anschlüsse sind ebenfalls mit gleichspannungsseitigen Anschlüssen des lastseitigen selbstgeführter Pulsstromrichters verbunden. Die Transformatorfrequenz des Mittelfrequenz-Transformators in Höhe von 5kHz ist ein technisch realistischer Kompromiss zwischen Volumen und Gewicht des Mittelfrequenz-Transformators und den Schaltverlusten der abschaltbaren Leistungshalbleiter eines jeden Kaskadenmoduls und des Ausgangsstromrichters.

Aus der Veröffentlichung mit dem Titel "Medium Frequency Topology in Railway Applications" von Dr. Michael Steiner und Dr. Harry Reinold, abgedruckt im Konferenzband der European Conference of Power Electronics and Applications, Aalborg, 2007 ist ebenfalls ein Antriebssystem für ein Schienenfahrzeug bekannt, das netzseitig eine Vielzahl von Stromrichter-Gruppen und lastseitig zwei selbstgeführte Pulsstromrichter aufweist, an denen jeweils zwei Drehstrommotoren angeschlossen sind. Jede Stromrichter-Gruppe weist netzseitig einen Vierquadrantensteller auf, dem gleichspannungsseitig ein Serienresonanz-DC/DC-Wandler in Vollbrückenschaltung nachgeschaltet ist. Jeder Serienresonanz-DC/DC-Wandler weist einen einphasigen Mittelfrequenz-Transformator auf. Die gleichspannungsseitigen Ausgänge eines jeden Serienresonanz-DC/DC-Wandlers bilden die Ausgänge einer jeden Stromrichter-Gruppe, die elektrisch parallel geschaltet sind. Netzseitig sind die Vierquadrantensteller der Stromrichter-Gruppen elektrisch in Reihe geschaltet. Dadurch wird eine Gegenspannung zur Netzwechselspannung gleichmäßig in Teilspannungen aufgeteilt. Bei einer maximalen Amplitude einer Netzwechselspannung von 15kV werden bei der Verwendung von handelsüblichen abschaltbaren Leistungshalbleitern beispielsweise wenigstens acht Stromrichter-Gruppen benötigt, wodurch ebenfalls acht Mittelfrequenz-Transformatoren vorhanden sind.

Soll dieses Antriebssystem für ein Schienenfahrzeug neben einer Wechselspannungseinspeisung auch mit einer Netzgleichspannung betrieben werden, so kann eine von zwei Netzgleichspannungen, nämlich 1,5 kV oder 3kV, direkt mit einem das netzseitige Stromrichtersystem und die beiden lastseitigen selbstgeführten Stromrichter verbindenden Spannungszwischenkreis zugeführt werden. Welche Netzgleichspannung zugeführt werden kann, hängt von der Spannung des Spannungszwischenkreises ab, die von den im selbstgeführten Stromrichter verwendeten abschaltbaren Leistungshalbleitern, insbesondere IGBTs, ab. Werden 3,3kV-IGBTs verwendet, beträgt die Amplitude der Zwischenkreisspannung 1,5kV. Werden dagegen 6.5kV-IGBTs verwendet, so beträgt die Amplitude der Zwischenkreisspannung des Spannungszwischenkreises 3kV. Somit kann nur eine von zwei vorhandenen Netzgleichspannungen verwendet werden, um direkt in den Zwischenkreis einzuspeisen. In der zuvor genannten Veröffentlichung wird nur Bezug genommen auf ein Bahngleichspannungssystem mit einer Amplitude von 3kV.

Aus der Veröffentlichung "Power Electronics Traction Transformer" von Nicolas Hugo, Philippe Stefanutti, Marc Pellerin und Alper Akdag, abgedruckt im Konferenzband der European Conference of Power Electronics and Applications (EPE), Aalborg 2007, ist ein weiteres Antriebssystem für ein Schienenfahrzeug bekannt, dessen netzseitiges Stromrichtersystem sechszehn'Matrixumrichter jeweils mit vier bidirektionalen Leistungsschaltern aufweist. Diese Matrixumrichter sind netzseitig zwischen einem Fahrdraht/Stromabnehmer-System und einem Rad/Schiene-System elektrisch in Reihe geschaltet. Ausgangsseitig ist jeder Matrixumrichter mittels eines einphasigen Mittelfrequenz-Transformators mit wechselspannungsseitigen Anschlüssen eines Ausgangsstromrichters verknüpft. Gleichspannungsseitig sind diese Ausgangsstromrichter elektrisch parallel geschaltet, denen ein Kondensator, insbesondere ein Zwischenkreis-Kondensator, eines Spannungszwischenkreises elektrisch parallel geschaltet ist. An diesen beiden gleichspannungsseitigen Anschlüssen des netzseitigen Stromrichtersystems des Antriebssystems für ein Schienenfahrzeug ist ein lastseitiger selbstgeführter Pulsstromrichter mit einem Antriebsmotor, insbesondere einem Drehstrommotor, angeschlossen. Diese maschinenseitigen Komponenten sind in dieser Veröffentlichung nicht explizit dargestellt.

Aus der EP 0 820 893 A2 ist ein Antriebssystem für ein Schienenfahrzeug bekannt, das netzseitig mehrere, zwischen einem Fahrdraht/Stromabnehmer-System und einem Rad/Schiene-System über eine Drossel elektrisch in Reihe geschalteten Teilstromrichtersystemen aufweist. Jedes Teilstromrichtersystem besteht aus mindestens einem netzseitigen Vierquadrantensteller, mindestens einem primärseitigen Zwischenkreis-Kondensator, mindestens einem primärseitigen Wechselrichter und mindestens einem Mittelfrequenz-Transformator. Sekundärseitig weist jedes Teilstromrichtersystem einen Vierquadrantensteller auf, die gleichspannungsseitig elektrisch parallel geschaltet sind, und somit einen gemeinsamen sekundärseitigen Gleichspannungs-Zwischenkreis des Antriebssystems bilden. An diesem sekundärseitigen Gleichspannungs-Zwischenkreis sind entsprechend der Anzahl anzutreibender Antriebsmotoren Maschinenstromrichter angeschlossen. Mit Hilfe einer Vielzahl von Teilstromrichtersystemen wird eine relativ hohe Wechselspannung zwischen Fahrdraht/Stromabnehmer-System und Rad/Schiene-System entsprechend der Anzahl dieser Teilstromrichtersysteme derart aufgeteilt, dass Halbleiterschalter üblicher Spannungsfestigkeit verwendet werden können.

Dieser EP-Offenlegungsschrift kann außerdem entnommen werden, dass dieses vorgeschlagene Antriebssystem auch zu einer Mehrsystem-Schaltung erweitert werden kann, welche durch Umgruppierungen von einzelnen Komponenten des Antriebssystems an unterschiedlichen Netzen betrieben werden kann. Welche Komponenten wie umgruppiert werden müssen, damit dieses Antriebssystem für ein Schienenfahrzeug mehrsystemfähig wird, kann dieser EP-Offenlegungsschrift nicht entnommen werden.

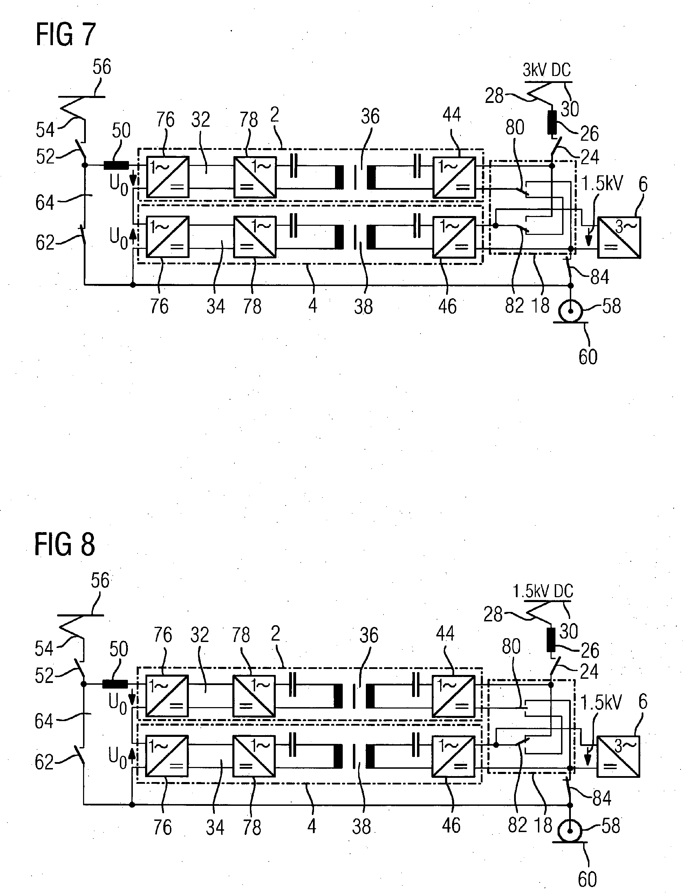

Aus der EP 1 226 994 A2 ist ebenfalls ein Antriebssystem für ein Schienenfahrzeug bekannt, das neben einer Netzwechselspannung außerdem von einer Netzgleichspannung in Höhe von 1,5kV oder 3kV gespeist werden kann. Gemäß der FIG 8 dieser EP-Offenlegungsschrift wird eine niedrige Netzgleichspannung in Höhe von 1,5kV mittels eines Schaltgeräts direkt mit den gleichspannungsseitigen Ausgängen des Ausgangs-Stromrichters der netzseitigen Einspeisevorrichtung verknüpft. An diesen Ausgängen ist mittels eines Gleichspannungs-Zwischenkreises ein lastseitiger selbstgeführter Stromrichter des Traktionsstromrichters gleichspannungsseitig angeschlossen. Mittels des Schaltgeräts wird eine positive Potentialschiene des Gleichspannungs-Zwischenkreises mittels eines Stromabnehmers mit einer Netzgleichspannung von beispielsweise 1,5kV, die an einer Fahrleitung ansteht, verbunden. Eine negative Potentialschiene ist mit einem Antriebsrad eines schienengebundenen Fahrzeugs, das mittels einer Schiene geerdet ist, verbunden. Durch eine Umkonfigurierung der Stromrichter-Gruppen der netzseitigen Einspeisevorrichtung von einer Reihenschaltung in eine Parallelschaltung kann diese Schaltung auch an eine Netzgleichspannung von 3kV betrieben werden. Dieser Traktionsstromrichter kann an Wechselspannungen von 15kV, 16.7Hz oder 25kV, 50Hz und an einer Gleichspannung von 1,5kV oder 3kV betrieben werden. Nachteil dieses Mehrsystem-Traktionsstromrichters besteht darin, dass für einen Betrieb an einer Netzgleichspannung mit einer Netzamplitude in Höhe von 3kV eine Vielzahl von mechanischen Schaltern verwendet werden muss, um die Stromrichter-Gruppen dieser netzseitigen Ein- , speisevorrichtung von einer Reihenschaltung in eine Parallelschaltung umzukonfigurieren.

Beträgt die Amplitude einer Zwischenkreisspannung eines Traktionsstromrichters 3kV, werden als abschaltbare Leistungshalbleiterschalter eines lastseitigen selbstgeführten Pulsstromrichters 6.5kV-IGBTs verwendet, wogegen bei einer Amplitude der Zwischenkreisspannung in Höhe von 1,5kV 3.3kV-IGBTs verwendet werden. Beträgt die Amplitude einer Zwischenkreisspannung 3kV oder 1,5kV, kann dieses bekannte Antriebssystem für ein Schienenfahrzeug, dessen netzseitiges Stromrichtersystem auch als Mittelfrequenz-Energieversorgung für ein Schienenfahrzeug bezeichnet wird, nicht an allen vier Bahnsystemen mit Direkteinspeisung in einen Spannungszwischenkreis des Antriebssystems im Gleichspannungsbetrieb betrieben werden, so dass es sich bei diesem Traktionsstromrichter nicht um einen Mehrsystem-Traktionsstromrichter mit voller Mehrsystemfähigkeit handelt.

Der Erfindung liegt nun die Aufgabe zugrunde, ein Antriebssystem für ein Schienenfahrzeug anzugeben, das ohne großen Aufwand derart umgruppiert werden kann, damit dieses Antriebssystem voll mehrsystemfähig ist.

Diese Aufgabe wird mit einem Antriebssystem gemäß Anspruch 1 erfindungsgemäß gelöst.

Dadurch, dass ein netzseitiges Einspeisesystem des erfindungsgemäßen Antriebssystems in zwei Teilstromrichtersysteme unterteilt ist, wobei jedes Teilstromrichtersystem n AC/AC-Umrichter, ein Mittelfrequenz-Transformatorsystem mit jeweils k Mittelfrequenz-Transformatoren, die jeweils n Primärwicklungen und j Sekundärwicklungen, und ein lastseitiges Stromrichtersystem mit wenigstens einem AC/DC-Stromrichter aufweist, und dass die netzseitige elektrisch in Reihe geschalteten AC/AC-Umrichter der beiden Teilstromrichtersysteme mittels einer Filterdrossel und eines Schaltgeräts kurzschließbar sind, wird eine von einer Last geforderte Leistung beim Betrieb an einer Netzgleichspannungs-Einspeisung aus diesem speisenden Gleichspannungsnetz mittels eines ersten Teilstromrichtersystems zur gebildeten Kurzschlussmasche und von dort mittels des zweiten Teilstromrichtersystems zum Spannungszwischenkreis des Antriebssystems geführt, die dann mittels eines lastseitigen selbstgeführten Stromrichters wenigstens einem Antriebsmotor zugeführt wird. Damit ein symmetrierender Ausgleich stattfinden kann, werden die AC/AC-Umrichter netzseitig derart gesteuert, dass diese eines jeden Teilstromrichtersystems jeweils eine Gleichspannung generiert, die amplitudenmäßig gleich, aber entgegengesetzter Polarität sind. Damit eine gewünschte Leistung von einem Teilstromrichtersystem mittels der Kurzschlussmasche auf das zweite Teilstromrichtersystem übertragen werden kann, wird der Strom durch die Filterdrossel in der Kurzschlussmasche entsprechend geregelt. Bezogen auf die Leistung wirkt das eine Teilstromrichtersystem des erfindungsgemäßen Antriebssystems als Quelle, wogegen sein zweites Teilstromrichtersystem als Senke wird.

Gleichspannungsseitig weisen diese beiden Teilstromrichtersysteme jeweils ein lastseitiges Stromrichtersystem mit wenigstens einem AC/DC-Stromrichter auf. In Abhängigkeit der Spannung im Zwischenkreis des Antriebssystems und einer anstehenden Netzgleichspannung können nun diese beiden lastseitigen Stromrichtersysteme mittels einer Schaltgeräte-Einheit mit dem lastseitigen selbstgeführter Stromrichter auf einfache Weise verknüpft werden.

Somit erhält man mit der erfindungsgemäßen Ausgestaltung eines Antriebssystems für ein Schienenfahrzeug ein mehrsystemfähiges Antriebssystem, wobei in Abhängigkeit einer anstehenden Netzspannung dieses Antriebssystem auf diese Netzspannung einfach konfigurierbar ist.

Vorteilhafte Ausführungsformen der Komponenten des erfindungsgemäßen Antriebssystems für ein Schienenfahrzeug sind den Unteransprüchen zu entnehmen.

Zur weiteren Erläuterung wird auf die Zeichnung Bezug genommen, in der mehrere Ausführungsformen des erfindungsgemäßen Antriebssystems schematisch veranschaulicht sind.
- FIG 1: zeigt ein Ersatzschaltbild eines erfindungsgemäßen Antriebssystems, die
- FIG 2 bis 6: zeigen unterschiedlichen Ausführungsformen zweier Komponenten des Antriebssystems nach FIG 1, die
- FIG 7 bis 10: zeigen jeweils ein Prinzipschaltbild des erfindungsgemäßen Antriebssystems nach FIG 1 an unterschiedlichen Netzgleichspannungen und unterschiedlichen Zwischenkreisspannungen, und in den
- FIG 11 bis 16: sind Ausführungsformen des erfindungsgemäßen Antriebssystems nach FIG 1 näher dargestellt.

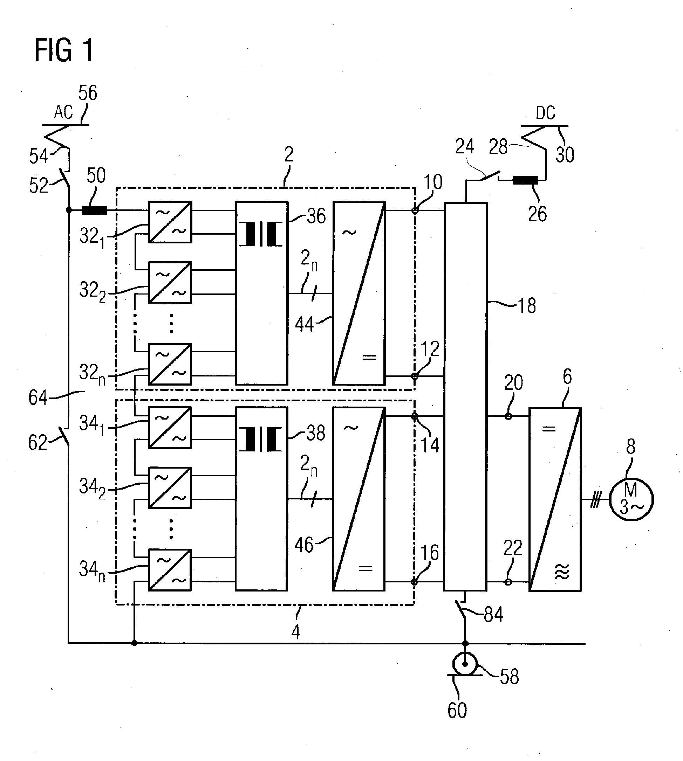

In FIG 1 ist ein Ersatzschaltbild eines Antriebssystems für ein Schienenfahrzeug nach der Erfindung veranschaulicht. Dieses Antriebssystem weist netzseitig ein zwei Teilstromrichtersysteme 2 und 4 aufweisendes Einspeisesystem und lastseitig einen selbstgeführten Stromrichter 6 auf. An den wechselspannungsseitigen Ausgängen dieses Pulsstromrichters 6 ist ein Antriebsmotor 8, insbesondere ein Drehstrommotor, angeschlossen. Die gleichspannungsseitigen Anschlüsse 10,12 und 14,16 der beiden Teilstromrichtersysteme 2 und 4 sind mittels einer Schaltgeräte-Einheit 18 mit gleichspannungsseitigen Anschlüssen 20,22 des maschinenseitigen Pulsstromrichters 6 verbindbar, wobei ein weiterer Eingang dieser Schaltgeräte-Einheit 18 mittels eines Schalters 24, einer Filterdrossel 26 und eines Stromabnehmers 28 mit einem Fahrdraht 30 verknüpfbar ist, an dem eine Netzgleichspannung ansteht.

Jedes Teilstromrichtersystem 2 bzw. 4 weist n AC/AC-Umrichter 32₁,..., 32₂ bzw. 34₁,..., 34ₙ, wobei n eine durch zwei teilbare ganze Zahl ist, ein Mittelfrequenz-Transformatorsystem 36 bzw. 38 mit k Mittelfrequenz-Transformatoren, die jeweils n Primärwicklungen 40 und j Sekundärwicklungen 42 aufweisen, und ein lastseitiges Stromrichtersystem 44 bzw. 46 mit wenigstens einem AC/DC-Stromrichter 48 auf. Mittels der k Mittelfrequenz-Transformatoren des Mittelfrequenz-Transformatorsystems 36 bzw. 38 sind die n AC/AC-Umrichter mit dem lastseitigen Stromrichtersystem 44 bzw. 46 potentialtrennend verknüpft. Die n AC/AC-Umrichter 32₁,...,32ₙ und 34₁,...,34ₙ der beiden Teilstromrichtersysteme 2 und 4 sind netzseitig elektrisch in Reihe geschaltet. Diese netzseitige Reihenschaltung dieser 2n AC/AC-Umrichter 32₁,..., 32ₙ und 34₁,..., 34ₙ ist einerseits mittels einer Filterdrossel 50, eines Schalters 52 und eines Stromabnehmers 54 mit einem Fahrdraht 56, an dem eine Wechselspannung ansteht, und andererseits mittels eines Antriebsrads 58 eines schienengebundenen Fahrzeugs elektrisch leitend verbindbar, das mittels einer Schiene 60 geerdet ist.

Neben dieser zweiteiligen Ausführung des netzseitigen Einspeisesystems weist das Antriebssystem nach der Erfindung ein Schaltgerät 62 auf, mit dem die Filterdrossel 50 elektrisch parallel zur Reihenschaltung der 2n AC/AC-Umrichter 32₁,...,32ₙ und 34₁,...,34ₙ der beiden Teilstromrichtersysteme 2 und 4 geschaltet werden kann. Dadurch ist eine Kurzschlussmasche 64 auf der Hochspannungsseite des netzseitigen Einspeisesystems des Antriebssystems nach der Erfindung entstanden. Im Gleichspannungsbetrieb dieses Antriebssystems für ein Schienenfahrzeug sind der Schalter 24 und das Schaltgerät 62 geschlossen, wobei der Schalter 52 geöffnet ist.

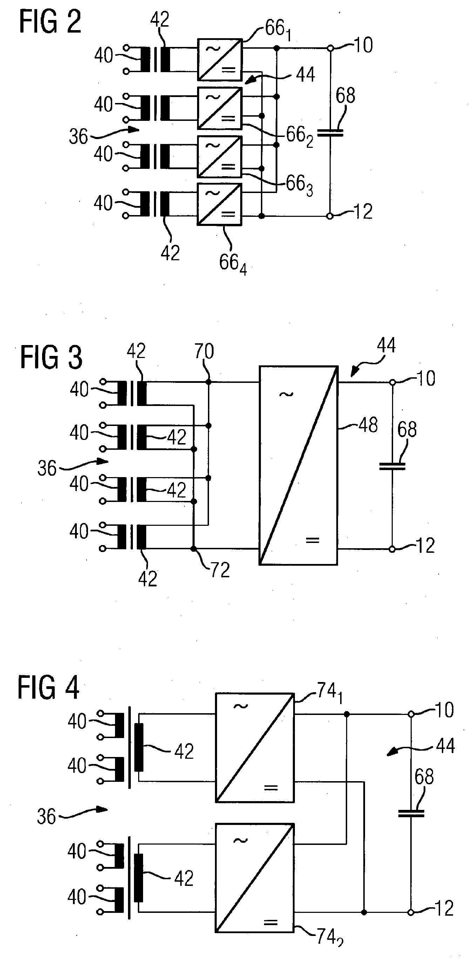

Als AC/AC-Umrichter 32₁,..., 32ₙ bzw. 34₁,..., 34ₙ, können aus den eingangs genannten Entgegenhaltungen bekannte Umrichter verwendet werden. Ausführungsformen des Mittelfrequenz-Transförmatorsystems 36 bzw. 38 und des lastseitigen Stromrichtersystems 44 bzw. 46 sind den FIG 2 bis 6 zu entnehmen, wobei n=4, k=4,2,1 und j=4,2,1 gewählt worden sind. Die Variablen n, k und j sind ganze Zahlen, wobei die Variable k ein ganzzahliger Teiler der Variablen n ist.

Gemäß FIG 2 weist eine erste Ausführungsform des Mittelfrequenz-Transformatorsystems 36 bzw. 38 entsprechend der Anzahl der AC/AC-Umrichter 32₁,..., 32ₙ bzw. 34₁,..., 34ₙ k einphasige Mittelfrequenz-Transformatoren mit k=n auf, die jeweils eine Primär- und Sekundärwicklung 40 und 42 aufweisen. Das dem Mittelfrequenz-Transformatorsystem 36 bzw. 38 nachgeschaltete lastseitige Stromrichtersystem 44 bzw. 46 weist in dieser Ausführungsform j AC/AC-Umrichter 66₁,..., 66ⱼ₌ₙ mit j=n auf, die gleichspannungsseitig elektrisch parallel geschaltet sind. Elektrisch parallel zu diesen beiden Anschlüssen der j sekundärseitig elektrisch parallel geschalteten AC/AC-Stromrichter 66₁,...,66ⱼ₌ₙ ist ein Kondensator 68 geschaltet.

In der Ausführungsform gemäß FIG 3 sind die j Sekundärwicklungen 42 der k einphasigen Mittelfrequenz-Transformatoren elektrisch parallel geschaltet, wodurch das Mittelfrequenz-Transformatorsystem 36 bzw. 38 zwei wechselspannungsseitige Anschlüsse 70 und 72 aufweist, an denen das lastseitige Stromrichtersystem 44 bzw. 48 wechselspannungsseitig angeschlossen ist. Durch die Parallelschaltung der j Sekundärwicklungen 42 wird beim lastseitigen Stromrichtersystem 44 bzw. 48 nur noch ein AC/DC-Stromrichter 48 benötigt. Gleichspannungsseitig ist ebenfalls ein Kondensator 68 vorgesehen.

Gemäß der Ausführungsform der FIG 4 weist jedes Mittelfrequenz-Transformatorsystem 36 bzw. 38 jeweils k=2 Mittelfrequenz-Transformatoren auf, die jeweils n/k Primärwicklungen 40 und eine (j=1) Sekundärwicklung 42 aufweisen. Das dem Mittelfrequenz-Transformatorsystem 36 bzw. 38 nachgeschaltete lastseitige Stromrichtersystem 44 bzw. 46 weist bei dieser Ausführungsform des Mittelfrequenz-Transformatorsystems 36 bzw. 38 zwei AC/DC-Stromrichter 74₁ und 74₂ auf, die gleichspannungsseitig elektrisch parallel geschaltet sind. Elektrisch parallel zu den beiden gleichspannungsseitigen Anschlüssen des lastseitigen Stromrichtersystems 44 bzw. 46 ist ebenfalls ein Kondensator 68 geschaltet.

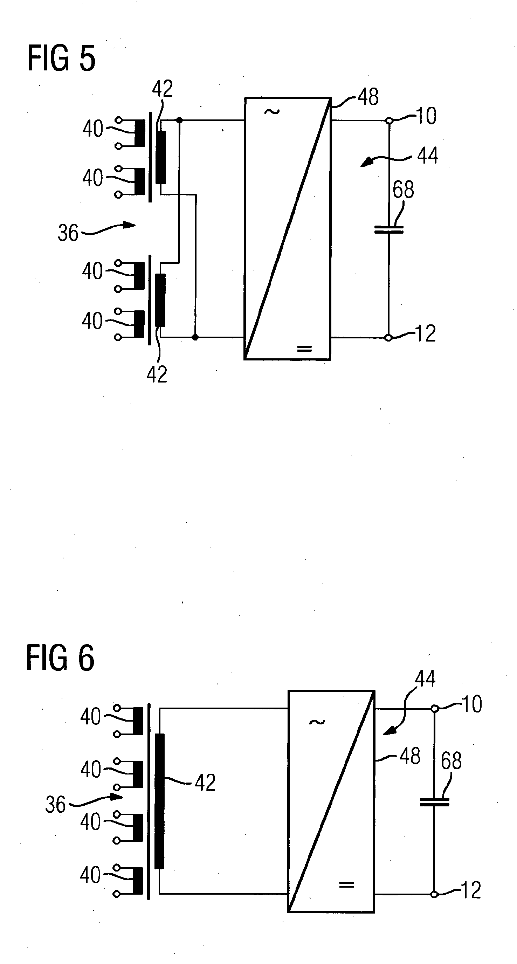

Die Ausführungsform des Mittelfrequenz-Transformatorsystems 36 bzw. 38 gemäß FIG 5 unterscheidet sich von der Ausführungsform gemäß FIG 4 dadurch, dass die j=2 Sekundärwicklungen 42 der k=2 Mittelfrequenz-Transformatoren elektrisch parallel geschaltet sind. Außerdem wird anstelle zweier AC/DC-Stromrichter 74₁ und 74₂ hier nur noch ein AC/DC-Stromrichter 48 benötigt. Auch diesem AC/DC-Stromrichter 48 ist gleichspannungsseitig ein Kondensator 68 parallel geschaltet.

In der Ausführungsform gemäß FIG 6 weist das Mittelfrequenz-Transformatorsystem 36 bzw. 38 einen (k=1) Mittelfrequenz-Transformator mit n Primärwicklungen 40 und einer (j=1) Sekundärwicklung 42 auf. Da nur eine Sekundärwicklung 42 vorgesehen ist, wird als lastseitiges Stromrichtersystem 44 bzw. 46 nur ein AC/DC-Stromrichter 48 benötigt, dem gleichspannungsseitig ein Kondensator 68 elektrisch parallel geschaltet ist. Das heißt, dieses lastseitige Stromrichtersystem 44 bzw. 48 entspricht in der Ausführungsform funktional dem lastseitigen Stromrichtersystem 44 bzw. 48 der Ausführungsform gemäß FIG 3.

Die in den Ausführungen der FIG 2 bis 6 gezeigten AC/DC-Umrichter 48, 66₁,..., 66ₙ, 74₁ und 74₂ können entsprechend dem in den eingangs genannten Entgegenhaltungen dargestellten AC/DC-Stromrichter aufgebaut sein. Diese AC/DC-Stromrichter des lastseitigen Stromrichtersystems 44 bzw. 46 werden als Vierquadrantensteller bezeichnet. Mittels dieser AC/DC-Stromrichter 48, 66₁,...,66ₙ, 74₁ und 74₂ wird aus einer Wechselspannung eine Gleichspannung generiert, die vom Kondensator 68 gestützt wird.

In der Entgegenhaltung von Dr. Steiner und Dr. Reinold wird der transformatorseitige Stromrichter des AC/AC-Umrichters, der Mittelfrequenz-Transformator und der AC/DC-Stromrichter des lastseitigen Stromrichtersystems als serienresonanter DC-DC-Umrichter in Vollbrücken-Konfiguration bezeichnet. Dadurch weist in dieser Veröffentlichung jedes Teilstromrichtersystem eines netzseitigen Einspeisesystems eines Antriebssystems für ein Schienenfahrzeug einen wechselspannungsseitigen Vierquadrantensteller mit nachgeschaltetem Serienresonanz-DC-DC-Umrichter auf, wobei die Vierquadrantensteller eingangsseitig elektrisch in Reihe und die Serienresonanz-DC-DC-Umrichter lastseitig elektrisch parallel geschaltet sind.

Damit das Antriebssystem nach der Erfindung ohne großen Aufwand auch mit einer von zwei Gleichspannung gespeist werden kann, muss die Anzahl der benötigten AC/AC-Umrichter des netzseitigen Einspeisesystems durch zwei teilbar sein, damit diese AC/AC-Umrichter gleichmäßig auf zwei Teilstromrichtersysteme aufgeteilt werden können. Dadurch generieren diese beiden Teilstromrichtersysteme jeweils eine Gleichspannung in der Kurzschlussmasche 64, die amplitudenmäßig gleich, aber entgegengesetzt polarisiert sind. In Abhängigkeit einer Stromregelung des Stroms in der Kurzschlussmasche 64 wird die mittels der Kurzschlussmasche 64 reflektierte Leistung eingestellt.

Bei einer Gleichspannungseinspeisung bei einem Antriebssystem wird zwischen vier Spannungskombinationen unterschieden. Diese vier Spannungskombinationen sind bei einem Antriebssystem für ein Schienenfahrzeug nach der Erfindung in den FIG 7 bis 10 schematisch veranschaulicht. In den FIG 7 bis 10 sind die n AC/AC-Umrichter 32₁,...,32ₙ des Teilstromrichtersystems 2 und die n AC/AC-Umrichter 34₁,...,34ₙ des Teilstromrichtersystems 4 jeweils durch einen AC/AC-Umrichter 32 und 34 dargestellt. Außerdem ist als AC/AC-Umrichter ein einphasiger Spannungszwischenkreis-Umrichter vorgesehen, der netzseitig einen Vierquadrantensteller 76 und transformatorseitig einen Wechselrichter 78 aufweist, die gleichspannungsseitig mittels eines Spannungszwischenkreises mit einem Stützkondensator, der hier nicht näher dargestellt ist, miteinander verknüpft sind. Gleichspannungsseitig sind die beiden Teilstromrichtersysteme 2 und 4 mittels der Schaltgeräte-Einheit 18 mit gleichspannungsseitigen Anschlüssen 20, 22 des lastseitigen selbstgeführten Stromrichters 6 verknüpfbar.

In der FIG 7 steht am Fahrdraht 30 eine Netzgleichspannung mit einem Spannungswert von 3kV an. Im Spannungszwischenkreis des Antriebssystems und damit an den gleichspannungsseitigen Anschlüssen 20, 22 des lastseitigen Pulsstromrichters 6 steht eine Gleichspannung in Höhe von 1,5kV an, die der Hälfte der Netzgleichspannung entspricht. Die Schaltgeräte-Einheit 18 weist in der FIG 7 zwei Schaltgeräte 80 und 82 auf, die jeweils als Umschaltgeräte ausgeführt sind. Das Umschaltgerät 80 ist eingangsseitig mit einem netzseitigen Gleichspannungsanschluss 12 des lastseitigen Stromrichtersystems 44 verbunden, wobei sein erster Ausgang mit dem Antriebsrad 58 und sein zweiter Ausgang mit einem Eingang des zweiten Umschaltgeräts 82, der ebenfalls mit dem positiven Gleichspannungsanschluss 14 des lastseitigen Stromrichtersystems 46 des zweiten Teilstromrichtersystems 4 verknüpft ist. Der erste Ausgang dieses Umschaltgeräts 82 ist einerseits mit dem Schalter 24 verknüpft, der bei Gleichspannungseinspeisung geschlossen ist, und andererseits mit dem positiven Gleichspannungsanschluss 10 des lastseitigen Stromrichtersystems 44 des ersten Teilstromrichtersystems 2 verknüpft. Der gleichspannungsseitige Anschluss 20 des lastseitigen selbstgeführten Stromrichters 6 ist direkt mit dem gleichspannungsseitigen Anschluss 14 des lastseitigen Stromrichtersystems 46 des zweiten Teilstromrichtersystems 4 des Antriebssystems verknüpft. Der gleichspannungsseitige Anschluss 22 des lastseitigen selbstgeführten Stromrichters 6 ist einerseits direkt mit dem gleichspannungsseitigen Anschluss 16 des lastseitigen Stromrichtersystems 46 des zweiten Teilstromrichtersystems 4 und andererseits mittels des Umschaltergerätes 84 mit dem Antriebsrad 58 verbunden. Diese beiden Umschaltgeräte 80 und 82 befinden sich in der Darstellung der FIG 7 jeweils im Schaltzustand I. Das Umschaltgerät 62 ist ebenfalls geschlossen, damit eine vom speisenden Gleichspannungsnetz eingespeiste Leistung mittels Kurzschlussmasche 64 reflektiert werden kann.

In der FIG 8 entspricht die am Fahrdraht 30 anstehende Netzgleichspannung der Zwischenkreisspannung des Antriebssystems. Diese Spannung beträgt 1,5kV. Bei dieser Spannungskombination befindet sich das Umschaltgerät 80 in einer neutralen Stellung, wobei sich das Umschaltgerät 82 in der Schalterstellung II befindet. Das Schaltgerät 62 ist bei dieser Gleichspannungskombination nicht geschlossen, da hier die Netzgleichspannung direkt im Spannungszwischenkreis eingespeist wird.

Alternativ kann das Schaltgerät 80 in seinem zweiten Schaltzustand II gebracht werden, so dass bei der Taktung der lastseitigen Stromrichtersystemen 44 und 46 und der Wechselrichter 78 die Zwischenkreiskapazität der AC/AC-Umrichter 32₁,...., 32ₙ mitgenutzt werden.

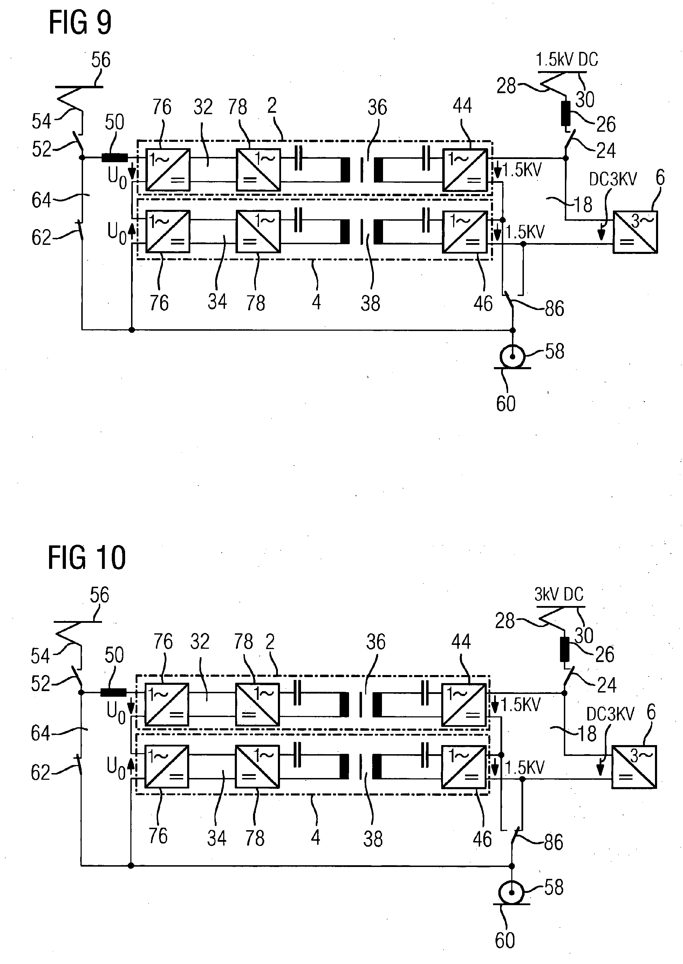

In der FIG 9 ist eine Konfiguration der beiden Teilstromrichtersysteme 2 und 4 des Antriebssystems und der Schaltgeräte-Einheit 18 bei einer weiteren Spannungskombination dargestellt. Die Netzgleichspannung in Höhe von 1,5kV entspricht nur der Hälfte der Zwischenkreisspannung in Höhe von 3kV des Antriebssystems. Außerdem weist die Schaltgeräte-Einheit 18 nur ein Umschaltgerät 86 auf. Eingangsseitig ist dieses Umschaltgerät 86 mit dem Antriebsrad 58 verknüpft, wogegen sein erster Ausgang mit dem gleichspannungsseitigen Anschluss 22 des lastseitigen selbstgeführten Stromrichter 6 und dem gleichspannungsseitigen Anschluss 16 des lastseitigen Stromrichtersystems 46 des zweiten Teilstromrichtersystems 4 des Antriebssystems verbunden ist. Sein zweiter Ausgang ist mit dem gleichspannungsseitigen Anschluss 14 des lastseitigen Stromrichtersystems 46 des zweiten Teilstromrichtersystems 4 und mit dem gleichspannungsseitigen Anschluss 12 des lastseitigen Stromrichtersystems 44 des ersten Teilstromrichtersystems 2 verknüpft. Der gleichspannungsseitige Anschluss 20 des lastseitigen selbstgeführten Pulsstromrichters 6 des Antriebssystems ist mit dem gleichspannungsseitigen Anschluss 10 des lastseitigen Stromrichtersystems 44 des ersten Teilstromrichtersystems 2 verbunden. Dieser Anschluss 10 ist ebenfalls mittels Schalter 24, Filterdrossel 26 und Stromabnehmer 28 mit dem Fahrdraht 30 elektrisch leitend verbunden, an dem eine Netzgleichspannung in Höhe von 1,5kV ansteht. Ebenfalls ist das Schaltgerät 62 geschlossen, so dass die Kurzschlussmasche 64 geschaltet ist. Durch diese Schaltersteller sind die lastseitigen Stromrichtersysteme44 und 46 elektrisch in Reihe geschaltet, während das Erdpotential auf dem Mittelpunktspotential liegt.

In FIG 10 sind die Netzgleichspannung und die Zwischenkreisspannung amplitudenmäßig gleich. Bei dieser Spannungskombination befindet sich das Umschaltgerät 86 in der Schalterstellung II und das Schaltgerät 82 ist geschlossen. Durch diese Schalterstellung II des Umschaltgeräts 86 sind die beiden lastseitigen Stromrichtersysteme 44 und 46 elektrisch in Reihe geschaltet, so dass sich deren Ausgangsspannungen addieren.

Die Schaltgeräte-Einheit 18 gemäß den beiden Ausführungsformen der FIG 9 und 10 weist nur ein Umschaltgerät 86 anstelle von zwei Umschaltgeräten 80 und 82 in den Ausführungsformen der FIG 7 und 8 auf. Dieses Umschaltgerät 86 ersetzt außerdem den Schalter 84, wenn eine Neutralstellung (Leerlauf) vorhanden ist.

Beim Betrieb dieses Antriebssystems für ein Schienenfahrzeug mit einem netzseitigen Einspeisesystem, das zwei Teilstromrichtersysteme aufweist, ist in den in FIG 7, 9 und 10 dargestellten Betriebsfällen jeweils der Schalter 52 geöffnet, der Schalter 24 und das Schaltgerät 62 sind geschlossen. Dadurch sind die 2n netzseitigen Vierquadrantensteller 76 der beiden Teilstromrichtersysteme 2 und 4 mittels der Filterdrossel 50 kurzgeschlossen. Eine vom speisenden Netz eingespeiste Leistung wird zur Hälfte mittels des ersten Teilstromrichtersystems 2 auf die Hochspannungsseite geführt, wobei diese in der Kurzschlussmasche auf das zweite Teilstromrichtersystem 4 reflektiert wird. Dadurch wird diese reflektierte Leistung mittels des zweiten Teilstromrichtersystems 4 wieder auf die motorseitige Gleichspannungsseite des Einspeisesystems geführt. Die Vierquadrantensteller 76 der beiden Teilstromrichtersysteme 2 und 4 werden vom selben Strom in der Filterdrossel 50 durchflossen. Durch Gegenkopplung der Spannungen der Vierquadrantensteller 76 der Kurzschlussmasche 64 wird die Symmetrierungsleistung von den Vierquadrantenstellern 76 des einen Teilstromrichtersystems 2 auf die Vierquadrantensteller 76 des zweiten Teilstromrichtersystems 4 reflektiert. Im Sinne geringer Leistungsverluste und größtmöglicher Einfachheit werden die Vierquadrantensteller 76 des ersten Teilstromrichtersystems 2 derart gesteuert, dass an deren Eingangs-Anschlüssen jeweils eine Gleichspannung U₀ ansteht. Gleichzeitig werden die Vierquadrantensteller 76 des zweiten Teilstromrichtersystems 4 derart gesteuert, dass an deren Eingangs-Anschlüssen ebenfalls jeweils eine Gleichspannung U₀ ansteht, die amplitudenmäßig gleich der Gegenspannung der Vierquadrantensteller 76 des ersten Teilstromrichtersystems 2, aber diesem entgegengerichtet ist. Die von den Vierquadrantenstellern 76 des zweiten Teilstromrichtersystems 4 generierten Gleichspannungen U₀ sind Gegenspannungen zu den von den Vierquadrantenstellern 76 des ersten Teilstromrichtersystems 2 generierten Gleichspannungen U₀. Der Strom durch die Filterdrossel 50 wird nun derart gesteuert, dass eine vom speisenden Netz gelieferte symmetrierende Leistung auf die Gleichspannungsseite des Einspeisesystems, des Antriebssystems übertragen werden kann. Grundsätzlich lässt sich die Leistung durch netzseitige Spannung und Strom eines jeden Vierquadrantenstellers 76 der beiden Teilstromrichtersysteme 2 und 4 einstellen, so dass sich unter Umständen eine sehr kleine Anregelzeit der Leistung, beispielsweise bei Leistungsumkehr, ergibt (direkte Steuerung der Spannung U₀, aber nur mittelbar steuerbar der Strom).

Bezogen auf die Leistungsübertragung von einem speisenden Gleichspannungsnetz zu einer am lastseitigen selbstgeführten Pulsstromrichter 6 angeschlossenen Motor 8, ist für die Übertragung der halben eingespeisten symmetrierenden Leistung auf die Wechselspannungsseite des netzseitigen Einspeisesystems das erste Teilstromrichtersystem 2 vorgesehen, wobei für dessen Rückübertragung auf die Gleichspannungsseite des netzseitigen Einspeisesystems das zweite Teilstromrichtersystem 4 vorgesehen ist. Übertragungsmäßig sind diese beiden Teilstromrichtersysteme 2 und 4 bei einer Gleichspannungseinspeisung mittels der geschalteten Kurzschlussmasche 64 gekoppelt.

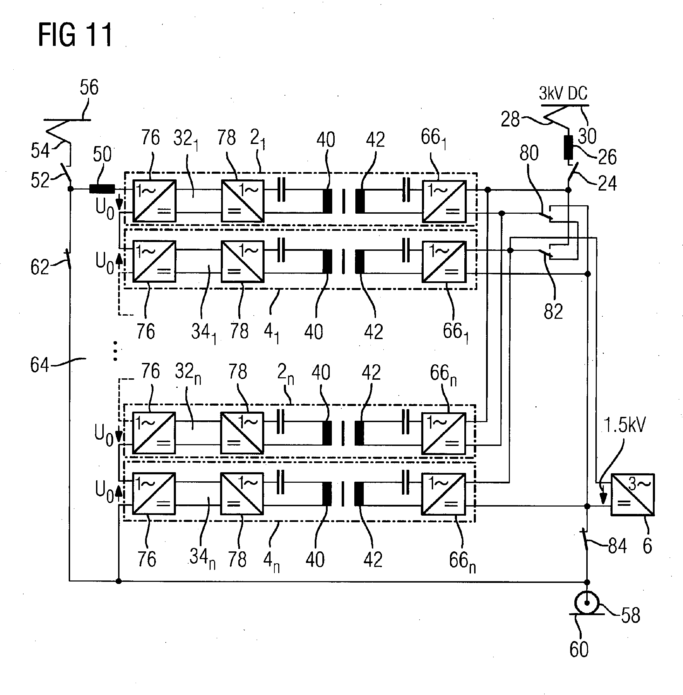

In den folgenden Figuren 11 bis 16 sind verschiedene Ausführungsformen des erfindungsgemäßen Antriebssystems für ein Schienenfahrzeug näher dargestellt.

In der Ausführungsform der FIG 11 sind als Mittelfrequenz-Transformatorsysteme 36 und 38 jeweils das Mittelfrequenz-Transformatorsystem gemäß FIG 2 vorgesehen. Die beiden Teilstromrichtersysteme 2 und 4 weisen jeweils eine Vielzahl von AC/AC-Umrichter 32₁,..., 32ₙ und 34₁,..., 34ₙ entsprechend der FIG 7 auf. Die Schaltgeräte-Einheit 18 weist entsprechend der FIG 7 zwei Umschaltgeräte 80 und 82 auf. Bei dem netzseitigen Einspeisesystem dieses Antriebssystems sind die AC/AC-Umrichter 32₁,..., 32ₙ und 34₁,..., 34ₙ der beiden Teilstromrichtersysteme 2 und 4 abwechselnd zueinander angeordnet, können aber auch zu einem Teilstromrichtersystem 2 bzw. 4 gehörend gruppiert sein.

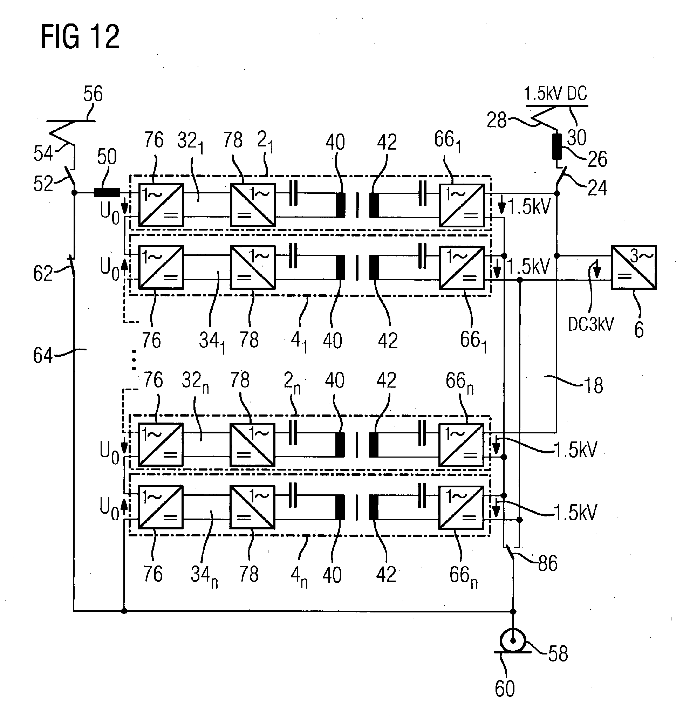

Die Ausführungsform des Antriebssystems gemäß FIG 12 entspricht im Wesentlichen der Ausführungsform gemäß FIG 11. Der einzige Unterschied besteht darin, dass die Schaltgeräte-Einheit 18 nur das Schaltgerät 86 entsprechend der FIG 9 aufweist.

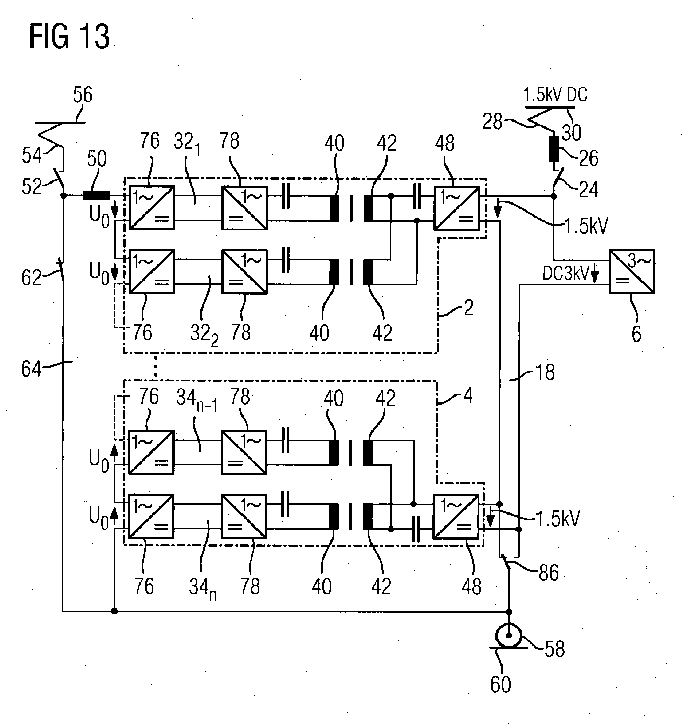

Die Ausführungsform des Antriebssystems gemäß FIG 13 kombiniert das Mittelfrequenz-Transformatorsystem 36 und 38 gemäß FIG 3 mit der Schaltgeräteeinheit 18 gemäß FIG 9.

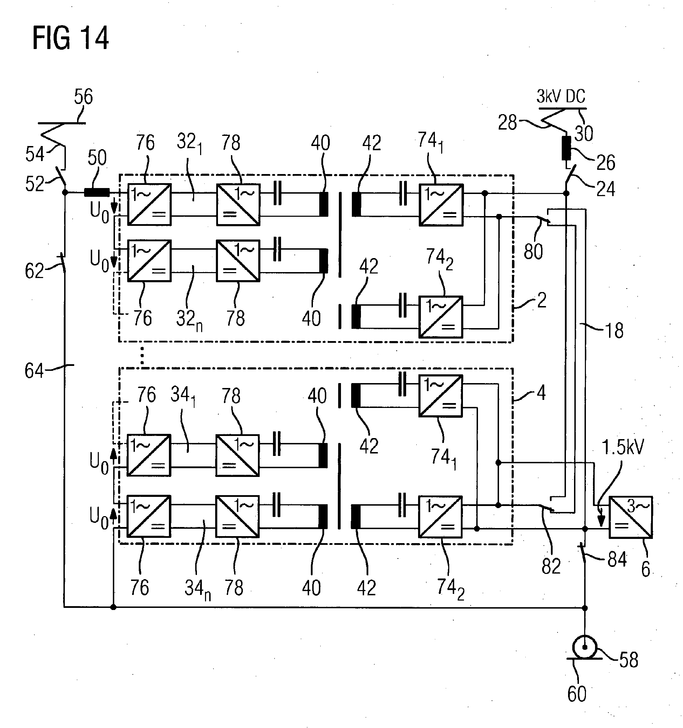

In der Ausführungsform gemäß FIG 14 wird jeweils als Mittelfrequenz-Transformatorsystem 36 und 38 der Teilstromrichtersysteme 2 und 4 die Ausführung der FIG 4 verwendet. Als Schaltgeräte-Einheit 18 ist die Einheit 18 gemäß FIG 7 vorgesehen.

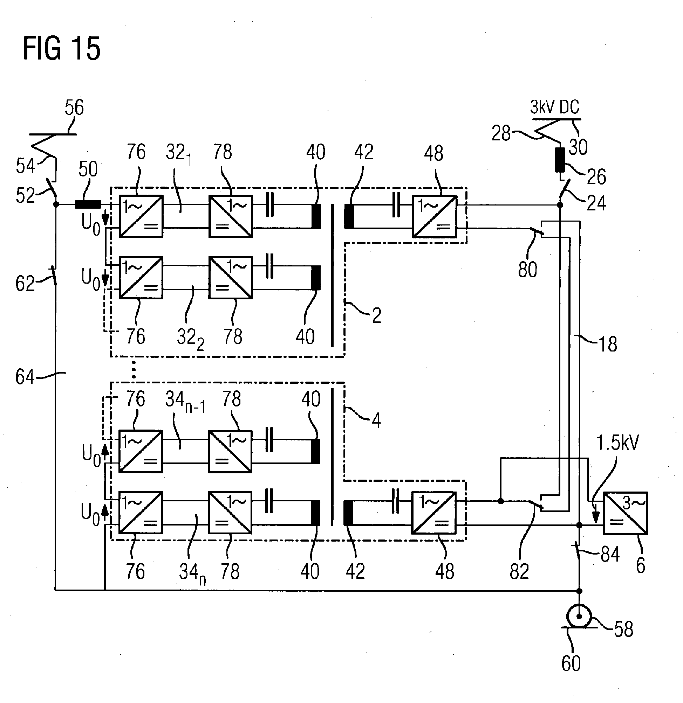

Bei der Ausführungsform gemäß FIG 15 wird jeweils als Mittelfrequenz-Transformatorsystem 36 und 38 der beiden Teilstromrichtersysteme 2 und 4 die Ausführungsform der FIG 6 verwendet. Als Schaltgeräte-Einheit 18 ist ebenfalls die Einheit 18 der FIG 7 vorgesehen.

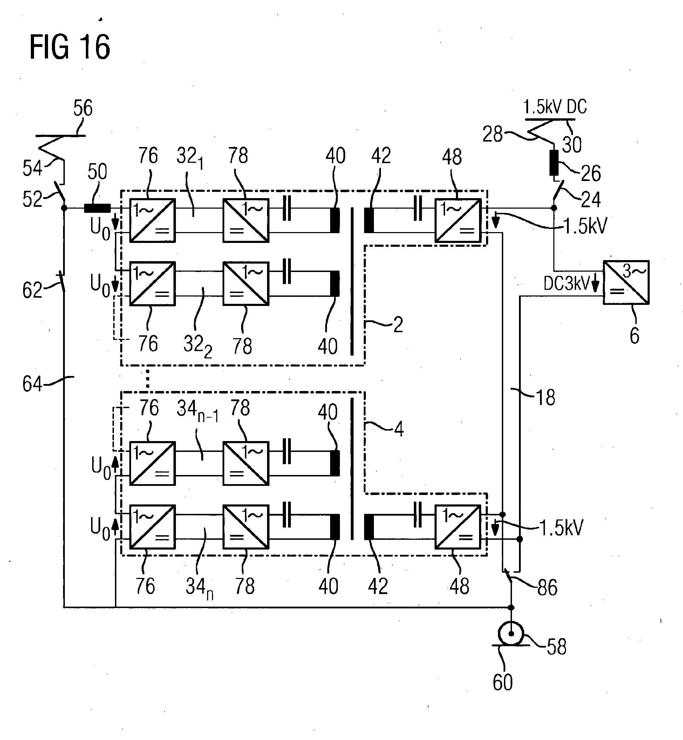

Die Ausführungsform gemäß FIG 16 unterscheidet sich von der Ausführungsform gemäß FIG 15 nur dadurch, dass als Schaltgeräte-Einheit 18 die Einheit 18 der FIG 9 vorgesehen ist.

Die Ausführungsformen gemäß dieser FIG 11 bis 16 sollen lediglich aufzeigen, wie die unterschiedlichen Ausführungsformen eines Mittelfrequenz-Transformators 36 bzw. 38, eines Teilstromrichtersystems 2 bzw. 4 und die beiden Schaltgeräte-Einheiten 18 mit n AC/AC-Umrichter 32₁,..., 32ₙ bzw. 34₁,..., 34ₙ eines Teilstromrichtersystems 2 bzw. 4 miteinander kombiniert werden können.

Anstelle der dargestellten AC/AC-Umrichter 32₁ bis 32ₙ können auch andere aus den eingangs genannten Veröffentlichungen bekannten Ausführungsformen eines AC/AC-Umrichters verwendet werden. Grundlage aller möglicher Kombinationen bildet das skizzierte erfindungsgemäße Antriebssystem gemäß FIG 1. Der wesentliche Aspekt des erfindungsgemäßen Antriebssystems besteht darin, dass das netzseitige Einspeisesystem des Antriebssystems zwei Teilstromrichtersysteme 2 und 4 aufweist muss, die zusammen eine durch zwei teilbare Anzahl von AC/AC-Umrichtern aufweisen, die netzseitig elektrisch in Reihe geschaltet sind, und dass diese netzseitig in Reihe geschalteten AC/AC-Umrichter bei Gleichspannungsbetrieb mittels der vorhandenen Filterdrossel 50 kurzschließbar sind.

## Patentansprüche

1. Antriebssystem für ein Schienenfahrzeug mit einem zwei Teilstromrichtersysteme (2,4) aufweisenden netzseitigen Einspeisesystem und einem lastseitigen selbstgeführten Stromrichter (6) mit einem ausgangsseitigen Drehstrommotor (8), wobei jedes Teilstromrichtersystem (2,4) n AC/AC-Umrichtern (32₁,..., 32ₙ; 34₁,..., 34ₙ), ein Mittelfrequenz-Transformatorsystem (36,38) mit k Mittelfrequenz-Transformatoren, die jeweils n Primärwicklungen (40) und j Sekundärwicklungen (42) aufweisen, und ein lastseitiges Stromrichtersystem (44,46) mit wenigstens einem AC/DC-Umrichter (48, 74₁, 74₂, 66₁,..., 66₄) aufweist, wobei die 2n AC/AC-Umrichter (32₁,..., 32ₙ; 34₁,..., 34ₙ) der beiden Teilstromrichtersysteme (2,4) elektrisch in Reihe geschaltet sind, wobei jeweils ein Transformatorsystem (36,38) der beiden Teilstromrichtersysteme (2,4) die n AC/AC-Umrichter (32₁,..., 32ₙ; 34₁,..., 34ₙ) eines jeden Teilstromrichtersystems (2,4) mit einem lastseitigen Stromrichtersystem (6) koppelt, wobei der Reihenschaltung der zwei n AC/AC-Umrichter (32₁,..., 32ₙ; 34₁,...,34ₙ) der beiden Teilstromrichtersysteme (2,4) mittels eines Schaltgeräts (62) eine Filterdrossel (50) elektrisch parallel schaltbar ist und wobei gleichspannungsseitige Anschlüsse (10,12,14,16) der beiden Teilstromrichtersysteme (2,4) und die gleichspannungsseitigen Anschlüsse (20,22) des lastseitigen selbstgeführten Stromrichters (6) mittels einer Schaltgeräte-Einheit (18), an der eine Netzgleichspannung ansteht, miteinander verschaltbar sind.

2. Antriebssystem nach Anspruch 1, **dadurch genkennzeichnet**, dass das Mittelfrequenz-Transformatorsystem (36,38) eines jeden Teilstromrichtersystems (2,4) k Mittelfrequenz-Transformatoren jeweils mit einer Primärund einer Sekundärwicklung (40,42) mit k=n aufweist.

3. Antriebssystem nach Anspruch 1, **dadurch gekennzeichnet**, dass das Mittelfrequenz-Transformatorsystem (36,38) eines jeden Teilstromrichtersystems (2,4) k Mittelfrequenz-Transformatoren jeweils mit einer Primär- und einer Sekundärwicklung (40,42) aufweist mit k=n, wobei diese Sekundärwicklungen (42) ausgangsseitig elektrisch parallel geschaltet sind.

4. Antriebssystem nach Anspruch 1, **dadurch gekennzeichnet**, dass das Mittelfrequenz-Transformatorsystem (36,38) eines jeden Teilstromrichtersystems (2,4) k Mittelfrequenz-Transformatoren jeweils mit n/k Primär- und j Sekundärwicklungen (40,42) aufweist, wobei k ein ganzzahliger Teiler von n ist.

5. Antriebssystem nach Anspruch 1, **dadurch gekennzeichnet,** dass das Mittelfrequenz-Transformatorsystem (36, 38) eines jeden Teilstromrichtersystems (2, 4) k Mittelfrequenz-Transformatoren jeweils mit n/k Primärund j Sekundärwicklungen (40,42) aufweist, wobei diese j Sekundärwicklungen (42) ausgangsseitig elektrisch parallel geschaltet sind, wobei k ein ganzzahliger Teiler von n ist.

6. Antriebsystem nach Anspruch 1, **dadurch gekennzeichnet**, dass das Mittelfrequenz-Transformatorsystem (36,38) eines jeden Teilstromrichtersystems (2,4) einen Mittelfrequenz-Transformator mit n Primär- und einer Sekundärwicklung (40,42) aufweist.

7. Antriebsystem nach Anspruch 1 und 2, **dadurch gekennzeichnet**, dass das lastseitige Stromrichtersystem (44,46) eines jeden Teilstromrichtersystems (2,4) n AC/DC-Stromrichter (66₁,..., 66ₙ) aufweist.

8. Antriebsystem nach Anspruch 1 und 3 bzw. 1 und 5 bzw. 1 und 6, **dadurch gekennzeichnet**, dass das lastseitige Stromrichtersystem (44,46) eines jeden Teilstromrichtersystems (2,4) einen AC/DC-Stromrichter (48) aufweist.

9. Antriebsystem nach Anspruch 1 und 4, **dadurch gekennzeichnet**, dass das lastseitige Stromrichtersystem (44,46) eines jeden Teilstromrichtersystems (2,4) k●j AC/DC-Stromrichter (74₁, 74₂) aufweist, die gleichspannungsseitig elektrisch parallel geschaltet sind.

10. Antriebsystem nach Anspruch 6 bis 9, **dadurch gekennzeichnet**, dass das lastseitige Stromrichtersystem (44,46) eines jeden Teilstromrichtersystems (2,4) gleichspannungsseitig mit einem Kondensator (68) versehen ist.

11. Antriebssystem nach einem der vorgenannten Ansprüche, **dadurch gekennzeichnet,** dass jeweils als AC/AC-Umrichter (32₁,..., 32ₙ; 34₁,..., 34ₙ) ein einphasiger Matrix-Umrichter mit vier bidirektionalen Schaltern vorgesehen ist.

12. Antriebssystem nach einem der Ansprüche 1 bis 10, **dadurch gekennzeichnet**, dass jeweils als AC/AC-Umrichter (32₁,..., 32ₙ; 34₁,..., 34ₙ) ein einphasiger Spannungszwischenkreis-Umrichter vorgesehen ist.

13. Antriebssystem nach Anspruch 12, **dadurch gekennzeichnet,** dass der einphasige Spannungszwischenkreis-Umrichter netzseitig einen Vierquadrantensteller (76) und transformatorseitig einen Wechselrichter (78) aufweist, die gleichspannungsseitig miteinander mittels eines Spannungszwischenkreises verknüpft sind.

14. Antriebssystem nach Anspruch 13, **dadurch gekennzeichnet**, dass der transformatorseitige Wechselrichter (48) eine Halbbrücke, eine Reihenschaltung zweier Kondensatoren und einen Serienkondensator aufweist, wobei die Reihenschaltung elektrisch parallel zur Halbbrücke geschaltet ist und der Serienkondensator mit einem Verbindungspunkt der beiden Kondensatoren verknüpft ist.

15. Antriebssystem nach Anspruch 13, **dadurch gekennzeichnet**, dass der transformatorseitige Wechselrichter (78) eine Halbbrücke und eine Reihenschaltung zweier Kondensatoren aufweist, wobei die Reihenschaltung elektrisch parallel zur Halbbrücke geschaltet ist und ein Verbindungspunkt zweier Kondensatoren und ein Ausgang der Halbbrücke jeweils einen Ausgangs-Anschluss des Spannungszwischenkreis-Umrichters bilden.

16. Antriebssystem nach einem der vorgenannten Ansprüche, **dadurch gekennzeichnet**, dass als AC/DC-Umrichter (48, 66₁,..., 66ₙ, 74₁, 74₂) ein Vierquadrantensteller vorgesehen ist.

17. Antriebssystem nach Anspruch 1, **dadurch gekennzeichnet**, dass die Schaltgeräte-Einheit (18) zwei Umschaltgeräte (80,82) aufweist.

18. Antriebssystem nach Anspruch 1, **dadurch gekennzeichnet**, dass die Schaltgeräte-Einheit (18) ein Umschaltgerät (86) aufweist.

## Claims

1. Drive system for a rail vehicle comprising a grid-side feed-in system having two partial power converter systems (2, 4), and a load-side self-commutated power converter (6) comprising an output-side three-phase motor (8), wherein each partial power converter system (2, 4) has n AC-to-AC converters (32₁, ..., 32ₙ; 34₁, ..., 34ₙ), a medium-frequency transformer system (36, 38) comprising k medium-frequency transformers, which each have n primary windings (40) and j secondary windings (42), and a load-side power converter system (44, 46) having at least one AC-to-DC converter (48, 74₁, 74₂, 66₁, ..., 66₄), wherein the 2n AC-to-AC converters (32₁, ..., 32ₙ; 34₁, ..., 34ₙ) of the two partial power converter systems (2, 4) are connected electrically in series, wherein in each case one transformer system (36, 38) of the two partial power converter systems (2, 4) couples the n AC-to-AC converters (32₁, ..., 32ₙ; 34₁, ..., 34ₙ) of each partial power converter system (2, 4) to a load-side power converter system (6), wherein the series circuit comprising the two n AC-to-AC converters (32₁, ..., 32ₙ; 34₁, ..., 34ₙ) of the two partial power converter systems (2, 4) is connectable electrically in parallel with a filter inductor (50) by means of a switching device (62), wherein DC-voltage-side connections (10, 12, 14, 16) of the two partial power converter systems (2, 4) and the DC-voltage-side connections (20, 22) of the load-side self-commutated power converter (6) are interconnectable with one another by means of a switching device unit (18), at which a DC mains voltage is present.

2. Drive system according to Claim 1, **characterized in that** the medium-frequency transformer system (36, 38) of each partial power converter system (2, 4) has k medium-frequency transformers, each having a primary winding and a secondary winding (40, 42), where k=n.

3. Drive system according to Claim 1, **characterized in that** the medium-frequency transformer system (36, 38) of each partial power converter system (2, 4) has k medium-frequency transformers, each having a primary winding and a secondary winding (40, 42), where k=n, wherein these secondary windings (42) are connected electrically in parallel on the output side.

4. Drive system according to Claim 1, **characterized in that** the medium-frequency transformer system (36, 38) of each partial power converter system (2, 4) has k medium-frequency transformers, each having n/k primary windings and j secondary windings (40, 42), where k is an integral devisor of n.

5. Drive system according to Claim 1, **characterized in that** the medium-frequency transformer system (36, 38) of each partial power converter system (2, 4) has k medium-frequency transformers, each having n/k primary windings and j secondary windings (40, 42), wherein these j secondary windings (42) are connected electrically in parallel on the output side, where k is an integral deviser of n.

6. Drive system according to Claim 1, **characterized in that** the medium-frequency transformer system (36, 38) of each partial power converter system (2, 4) has a medium-frequency transformer comprising n primary windings and one secondary winding (40, 42).

7. Drive system according to Claims 1 and 2, **characterized in that** the load-side power converter system (44, 46) of each partial power converter system (2, 4) has n AC-to-DC power converters (66₁, ..., 66ₙ).

8. Drive system according to Claims 1 and 3 or 1 and 5 or 1 and 6, **characterized in that** the load-side power converter system (44, 46) of each partial power converter system (2, 4) has an AC-to-DC power converter (48).

9. Drive system according to Claims 1 and 4, **characterized in that** the load-side power converter system (44, 46) of each partial power converter system (2, 4) has k●j AC-to-DC power converters (74₁, 74₂), which are connected electrically in parallel on the DC-voltage side.

10. Drive system according to Claims 6 to 9, **characterized in that** the load-side power converter system (44, 46) of each partial power converter system (2, 4) is provided with a capacitor (68) on the DC-voltage side.

11. Drive system according to one of preceding claims, **characterized in that** a single-phase matrix converter comprising four bidirectional switches is provided in each case as AC-to-AC converter (32₁, ..., 32ₙ; 34₁, ..., 34ₙ).

12. Drive system according to one of Claims 1 to 10, **characterized in that** a single-phase DC link converter is provided in each case as AC-to-AC converter (32₁, ..., 32ₙ; 34₁, ..., 34ₙ).

13. Drive system according to Claim 12, **characterized in that** the single-phase DC link converter has a four-quadrant converter (76) on the grid side and an inverter (78) on the transformer side, which four-quadrant converter and inverter are linked with one another on the DC-voltage side by means of a DC link.

14. Drive system according to Claim 13, **characterized in that** the transformer-side inverter (48) has a half-bridge, a series circuit comprising two capacitors and a series capacitor, wherein the series circuit is connected electrically in parallel with the half-bridge, and the series capacitor is linked to a node between the two capacitors.

15. Drive system according to Claim 13, **characterized in that** the transformer-side inverter (78) has a half-bridge and a series circuit comprising two capacitors, wherein the series circuit is connected electrically in parallel with the half-bridge, and a node between two capacitors and an output of the half-bridge each form an output connection of the DC link converter.

16. Drive system according to one of the preceding claims, **characterized in that** a four-quadrant converter is provided as AC-to-DC converter (48, 66₁, ..., 66ₙ, 74₁, 74₂).

17. Drive system according to Claim 1, **characterized in that** the switching device unit (18) has two switchover devices (80, 82).

18. Drive system according to Claim 1, **characterized in that** the switching device unit (18) has one switchover device (86).

## Revendications

1. Système de propulsion d'un véhicule ferroviaire comprenant un système d'alimentation du côté du réseau ayant deux sous-systèmes (2, 4) de convertisseur et un convertisseur (6) à commutation automatique du côté de la charge ayant un moteur (8) triphasé du côté de la sortie, chaque sous-système (2, 4) de convertisseur ayant n convertisseurs (32₁, ..., 32ₙ ; 34₁, ..., 34ₙ) courant alternatif / courant alternatif, un système (36, 38) de transformateur en moyenne fréquence ayant k transformateurs en moyenne fréquence, qui ont respectivement n enroulements (40) primaires et j enroulements (42) secondaires, et un système (44, 46) de convertisseur du côté de la charge ayant au moins un convertisseur (48, 74₁, 74₂, 66₁, ..., 66₄) courant alternatif / courant continu, les 2n convertisseurs (32₁, ..., 32ₙ ; 34₁, ..., 34ₙ) courant alternatif / courant alternatif des deux sous-systèmes (2, 4) de convertisseur étant montés électriquement en série, respectivement un système (36, 38) de transformateur des deux sous-systèmes (2, 4) de convertisseur reliant les n convertisseurs (32₁, ..., 32ₙ ; 34₁, ..., 34ₙ) courant alternatif / courant alternatif de chaque sous-système (2, 4) de convertisseur à un système (6) de convertisseur du côté de la charge, une bobine (50) de filtrage pouvant être montée électriquement en parallèle au circuit série des deux n convertisseurs (32₁, ..., 32ₙ ; 34₁, ..., 34ₙ) courant alternatif / courant alternatif des deux sous-systèmes (2, 4) de convertisseur, au moyen d'un appareil (62) de commutation et des bornes (10, 12, 14, 16) du côté de la tension continue des deux sous-systèmes (2, 4) de convertisseur et les bornes (20, 22) du côté de la tension continue du convertisseur (6) à commutation automatique du côté de la charge pouvant être reliées entre elles au moyen d'une unité (18) d'appareil de commutation, à laquelle s'applique une tension continue de réseau.

2. Système de propulsion suivant la revendication 1, **caractérisé en ce que** le système (36, 38) de transformateur en moyenne fréquence de chaque sous-système (2, 4) de convertisseur a k transformateurs en moyenne fréquence ayant respectivement un enroulement primaire et un enroulement secondaire (40, 42) avec k = n.

3. Système de propulsion suivant la revendication 1, **caractérisé en ce que** le système (36, 38) de transformateur en moyenne fréquence de chaque sous-système (2, 4) de convertisseur a k transformateurs de moyenne fréquence ayant respectivement un enroulement primaire et un enroulement (40, 42) secondaire avec k = n, ces enroulements (42) secondaires étant montés en parallèle électriquement du côté de la sortie.

4. Système de propulsion suivant la revendication 1, **caractérisé en ce que** le système (36, 38) de transformateur en moyenne fréquence de chaque sous-système (2, 4) de convertisseur a k transformateurs en moyenne fréquence ayant respectivement n/k enroulements (40) primaires et j enroulements (42) secondaires, k étant un diviseur en nombre entier de n.

5. Système de propulsion suivant la revendication 1, **caractérisé en ce que** le système (36, 38) de transformateur en moyenne fréquence de chaque sous-système (2, 4) de convertisseur a k transformateurs en moyenne fréquence ayant respectivement n/k bobines (40) primaires et j bobines (42) secondaires, ces j bobines (42) secondaires étant montées en parallèle électriquement du côté de la sortie, k étant un diviseur en nombre entier de n.

6. Système de propulsion suivant la revendication 1, **caractérisé en ce que** le système (36, 38) de transformateur en moyenne fréquence de chaque sous-système (2, 4) de convertisseur a un transformateur en moyenne fréquence ayant n enroulements (40) primaires et un enroulement (42) secondaire.

7. Système de propulsion suivant la revendication 1 et 2, **caractérisé en ce que** le système (40, 46) de convertisseur du côté de la charge de chaque sous-système (2, 4) de convertisseur a n convertisseurs (66₁, ..., 66ₙ) courant alternatif / courant continu.

8. Système de propulsion suivant la revendication 1 et 3 ou 1 et 5 ou 1 et 6, **caractérisé en ce que** le système (44, 46) de convertisseur du côté de la charge de chaque sous-système (2, 4) de convertisseur a un convertisseur (48) courant alternatif / courant continu.

9. Système de propulsion suivant la revendication 1 et 4, **caractérisé en ce que** le système (44, 46) de convertisseur du côté de la charge de chaque sous-système (2, 4) de convertisseur a k • j convertisseurs (74₁, 74₂) courant alternatif / courant continu, qui sont montés électriquement en parallèle du côté de la tension continue.

10. Système de propulsion suivant la revendication 6 à 9, **caractérisé en ce que** le système (44, 46) de convertisseur du côté de la charge de chaque sous-système (2, 4) de convertisseur est pourvu d'un condensateur (68) du côté de la tension continue.

11. Système de propulsion suivant l'une des revendications précédentes, **caractérisé en ce qu'**il est prévu, respectivement, comme convertisseur (32₁, ..., 32ₙ ; 34₁, ..., 34ₙ) courant alternatif / courant alternatif, un convertisseur de matrice monophasée ayant quatre commutateurs bidirectionnels.

12. Système de propulsion suivant l'une des revendications 1 à 10, **caractérisé en ce qu'**il est prévu, respectivement, comme convertisseur (32₁, ..., 32ₙ ; 34₁, ..., 34ₙ) courant alternatif / courant alternatif, un convertisseur de circuit intermédiaire de tension monophasée.

13. Système de propulsion suivant la revendication 12, **caractérisé en ce que** le convertisseur de circuit intermédiaire de tension monophasée a, du côté du réseau, un régulateur (76) à quatre cadrans et du côté du transformateur, un onduleur (78), qui sont, du côté de la tension continue, combinés entre eux au moyen d'un circuit intermédiaire de tension.

14. Système de propulsion suivant la revendication 13, **caractérisé en ce que** l'onduleur (48) du côté du transformateur a un demi-pont, un circuit série de deux condensateurs et un condensateur série, le circuit série étant monté électriquement en parallèle au demi-pont et le condensateur série étant combiné à un point de liaison des deux condensateurs.

15. Système de propulsion suivant la revendication 13, **caractérisé en ce que** l'onduleur (78) du côté du transformateur a un demi-pont et un circuit série de deux condensateurs, le circuit série étant monté électriquement en parallèle avec le demi-pont et un point de liaison de deux condensateurs et une sortie du demi-pont formant respectivement une borne de sortie du convertisseur de circuit intermédiaire de tension.

16. Système de propulsion suivant l'une des revendications précédentes, **caractérisé en ce qu'**il est prévu un régulateur à quatre cadrans comme convertisseur (48, 66₁, ..., 66ₙ, 74₁, 74₂) courant alternatif / courant continu.

17. Système de propulsion suivant la revendication 1, **caractérisé en ce que** l'unité (18) d'appareil de commutation a deux appareils (80, 82) de commutation.

18. Système de propulsion suivant la revendication 1, **caractérisé en ce que** l'unité (18) d'appareil de commutation a un appareil (86) de commutation.
